# EUROPEAN PATENT SPECIFICATION

(11) **EP 4 175 484 B1**
(45) Date of publication and mention of the grant of the patent: **04.12.2024**
(21) Application number: 21835754.9
(22) Date of filing: 14.12.2021
(51) Int. Cl.: A23L 2/385, A23L 2/60, A23L 27/00, A23L 29/10

(54) **FLAVOR COMPOSITIONS FOR BEVERAGE AND PERSONAL CARE APPLICATIONS**
GESCHMACKSZUSAMMENSETZUNGEN FÜR GETRÄNKE- UND KÖRPERPFLEGEANWENDUNGEN
COMPOSITIONS D'ARÔMES POUR BOISSON ET APPLICATIONS DE SOINS PERSONNELS

(30) Priority: 18.12.2020 WO PCT/CN2020/137594; 27.01.2021 EP 21153735
(43) Date of publication of application: 10.05.2023
(73) Proprietor: Firmenich SA, 1242 Satigny (CH)
(72) Inventor: MA, Qiumin, Shanghai, 201108 (CN); SHI, Lei, Shanghai, 201108 (CN); LI, Wenhao, Shanghai, 201108 (CN)
(74) Representative: Strych, Sebastian
(86) International application number: PCT/EP2021/085620
(87) International publication number: WO 2022/129000

(56) References cited:
- WO-A1-2011/089249
- WO-A1-2016/064828
- WO-A1-2020/152201
- US-A1- 2010 323 066
- US-A1- 2014 271 593

## Description

### Technical field

The present invention relates to a composition comprising a surfactant system comprising lecithin and a diterpene glycoside and/or a glucosylated diterpene glycoside, a non-polar phase comprising a flavor oil, and a polar phase. The invention further relates to a method for the preparation of the inventive composition, as well as to the use of the inventive composition for the preparation of a flavored beverage or personal care product. Moreover, the invention concerns a beverage or personal care product comprising the inventive composition.

### Background of the invention

For beverage and personal care applications, flavor compositions are desired.

Flavor compositions can be in the form of emulsions comprising a polar phase, an oil phase, as well as a surfactant system. The aqueous phase typically comprises water and/or one or more polar co-solvents and further ingredients. The oil phase is commonly dispersed within the aqueous phase thereby forming an oil-in-water emulsion. The dispersed oil phase typically comprises flavor oil(s) and optionally further lipophilic ingredients. WO 2020/152201 A1 relates to the field of liquid food and beverage systems used to stabilize food ingredients against oxidation and/or acid catalyzed degradation. WO 2016/064828 A1 relates to nano-emulsions containing only natural surfactants such as lecithins that are suitable for preparing clear beverages. WO 2011/089249 A1 relates to a composition comprising an aqueous phase, a surfactant system and an oil phase. US 2010/323066 A1 relates to a process for solubilizing flavor oils to produce clear beverages.

The present invention is able to provide a flavor composition, which is clear in appearance after dilution, but which is also stable, both in concentrated and in diluted form (within a beverage or personal care product). The stability is ensured over a wide range of temperatures and storage conditions.

In this regard, the flavor composition according to the invention shows at least a certain stability at acidic pH levels. As the pH-value of many beverages is commonly at acidic levels, good stability of the flavor emulsions under acidic conditions is advantageous. However, many emulsions according to the prior art are hardly stable under acidic conditions, as e.g. the surfactant used is not stable under acidic conditions.

Moreover, the inventive flavor compositions can also comprise sufficiently high amounts of flavor oil without showing any disadvantages as to the stability or appearance. A certain proportion of flavor oil in the flavor composition is needed in order to effectively provide flavor to a beverage, food or consumer product.

As many flavor oils suitable for incorporation in beverages or consumer products have limited solubility in polar solvents, such as water, non-naturally occurring surfactants are often used in order to prepare stable emulsified flavor compositions. However, customers are often skeptical as to the presence of non-natural (synthetic) additives in beverages or personal care products. Therefore, there is a high demand for natural (non-synthetic) alternative surfactants that likewise allow the preparation of stable emulsified flavor compositions.

The present invention provides solutions in order to provide the above-mentioned advantages and to overcome the above-mentioned disadvantages associated with known flavor compositions.

### Detailed description of the invention

The present invention relates to a composition comprising
- a surfactant system comprising
   - lecithin, and
   - a diterpene glycoside and/or a glucosylated diterpene glycoside,
- a non-polar phase comprising a flavor oil,
- a polar phase.

In a particular embodiment, the composition is an emulsion. An emulsion is to be understood as a mixture of two lipids that are immiscible due to their different polarities (hydrophobic vs. hydrophilic). In an emulsion, one liquid (dispersed or internal phase) is dispersed in another liquid (external or continuous phase). Therefore, the non-polar phase may be dispersed within the polar-phase, or the polar phase may be dispersed within the non-polar phase.

In a particular embodiment, the non-polar phase is dispersed within the polar phase. In another particular embodiment, the polar phase is dispersed within the non-polar phase. Preferably, the non-polar phase is dispersed within the polar phase.

In a particular embodiment, the emulsion is a microemulsion. Microemulsions including micellar solutions are usually transparent dispersions that form spontaneously without the need of energy input when the compounds thereof are properly mixed with each other. In view of the small size of dispersed oil-droplets, typically being in a range of between 10 and 300 nm, the visible light cannot be scattered and thus microemulsions appear as clear or translucent isotropic solutions. A typical oil-in-water microemulsion consists of water, a cosolvent such as an alcohol, oil, and one or more surfactants and co-surfactants. A high proportion of oil is feasible for microemulsion systems, which saves transportation and storage costs. Microemulsions are also thermodynamically stable.

In another particular embodiment, the emulsion is a nanoemulsion. In contrast to microemulsions, nanoemulsions are usually prepared by high-energy input, such as high-pressure homogenization to break the big droplets into small ones. The size of the oil-droplets is typically between 5 and 200 nm.

The composition according to the present invention comprises a surfactant system comprising lecithin and a diterpene glycoside and/or a glucosylated diterpene glycoside.

A surfactant system is required to obtain a composition that is thermodynamically stable at least for a certain period of time (e.g. for one month). Surfactants (emulsifiers) show amphiphilic properties meaning that they contain both hydrophobic and hydrophilic moieties. Based on these structural properties, surfactants are surface-active, which allows them to reduce the interfacial tension between a polar and non-polar phase and thus, to stabilize an emulsion.

In particular, the composition according to the present invention comprises lecithin as a surface-active compound or surfactant, respectively.

Under "lecithin" a mixture of phospholipids is understood. Phospholipids in lecithin include positively charged phospholipids (e.g. phosphatidylcholine, phosphatidylethanolamine, and phosphatidylserine) and negatively charged phospholipids (e.g. phosphatidic acid, phosphatidylglycerol, and phosphatidylinositol). Lecithin is prepared by extracting and purifying phospholipids from naturally occurring products including, but not limited to, soybeans, eggs, sunflower or rapeseed (canola) seeds, milk, marine sources, and cottonseeds. Food-grade lecithin is available in liquid, granular and powdered form from commercial sources. The term "lecithin" as used herein refers to both a single type of lecithin as well as to a mixture of different types of lecithin.

In a particular embodiment, lecithin is obtained from sunflower. Preferably, the lecithin is Lipoid Lecithin H100.

In a particular embodiment, lecithin is present in the composition in an amount of from 1 to 10 wt.%, preferably from 2.5 to 7.5 wt.%, more preferably from 3 to 7 wt.%.

In a particular embodiment, the composition is a nanoemulsion and comprises from 3 to 5 wt.% of lecithin.

In a particular embodiment, the composition is a microemulsion and comprises from 5 to 7 wt.% of lecithin.

According to the invention, the surfactant system further comprises a diterpene glycoside and/or a glucosylated diterpene glycoside.

Diterpene glycosides as well as glucosylated diterpene glycosides are well known to a skilled person and exist in a variety of plant sources.

In a particular embodiment, the diterpene glycoside is selected from the group consisting of steviol glycoside, rubusoside, paniculoside IV, suavioside (A, B, C₁, D₁, D₂, E, F, G, H, I, J), goshonoside (F₁, F₂, F₃, F₄, F₅), or any mixture.

In a particular embodiment, the diterpene glycoside is rubusoside.

In a particular embodiment, the diterpene glycoside is paniculoside IV.

In a particular embodiment, the diterpene glycoside is a suavioside. Preferably, the suavioside is selected from the group consisting of suavioside A, B, C₁, D₁, D₂, E, F, G, H, I, J, or any mixture thereof.

In a particular embodiment, the diterpene glycoside is a goshonoside. Preferably, the goshonoside is selected from the group consisting of goshonoside F₁, F₂, F₃, F₄, F₅, or any mixture thereof.

In a particular embodiment, the diterpene glycoside is a steviol glycoside.

A "steviol glycoside" is a glycoside of steviol. Specifically, a steviol glycoside can be viewed as a steviol molecule, with its carboxyl hydrogen atom replaced by a glucose molecule to form an ester, and a hydroxyl hydrogen with combinations of glucose and rhamnose to form an acetal. Further, steviol glycosides are the chemical compounds responsible for the sweet taste of the leaves of the South American plant *Stevia rebaudiana* Bertoni. Under the term "steviol glycoside" both a single steviol glycoside as well as a mixture of different steviol glycosides is encompassed.

In a particular embodiment, the glucosylated diterpene glycoside is a glucosylated steviol glycoside.

A "glucosylated steviol glycoside" comprises from 1 to 20 additional glucose units bound to the parent steviol glycoside. Under the term "glucosylated steviol glycoside" both a single glucosylated steviol glycoside as well as a mixture of different glucosylated steviol glycosides is encompassed.

Glucosylated steviol glycosides may be obtained by extracting and purifying steviol glycosides from the dried leaves of *Stevia rebaudiana* Bertoni, then reacting these steviol glycosides with glucotransferase enzymes in the presence of glucose resulting in the addition of glucose moieties to the parent steviol glycosides. These glucosylated steviol glycosides can be purified by e.g. employing adsorption and ion-exchange chromatography.

In the context of the present invention, steviol glycoside and/or glucosylated steviol glycoside act as further surfactants next to lecithin.

In a particular embodiment, the composition comprises diterpene glycoside and/or glucosylated diterpene glycoside in an amount that allows it to act as a surfactant.

In a particular embodiment, the composition comprises lecithin, and diterpene glycoside and/or glucosylated diterpene glycoside in amounts that allow the composition to be stable, preferably to be stable at room temperature.

In a particular embodiment, the composition comprises diterpene glycoside and/or glucosylated diterpene glycoside in an amount of from 1 to 40 wt.%, preferably from 2.5 to 30 wt.%.

In a particular embodiment, the composition comprises diterpene glycoside, preferably in an amount of from 1 to 10 wt.%, preferably from 2.5 to 7.5 wt.%, more preferably from 3 to 5 wt.%. In said particular embodiment, the composition is preferably a nanoemulsion.

In a particular embodiment, the composition comprises diterpene glycoside, preferably in an amount of from 15 to 25 wt.%, preferably from 17 to 22 wt.%, more preferably in an amount of 20 wt.%. In said particular embodiment, the composition is preferably a microemulsion.

In a particular embodiment, the composition comprises glucosylated diterpene glycoside, preferably in an amount of from 15 to 40 wt.%, preferably from 20 to 30 wt.%, more preferably from 22 to 28 wt.%. In said particular embodiment, the composition is preferably a microemulsion.

In a particular embodiment, the mass ratio of diterpene glycoside and/or glucosylated diterpene glycoside to lecithin is from 20:1 to 1:20, preferably from 10:1 to 1:10.

In a particular embodiment, the mass ratio of flavor oil to diterpene glycoside is greater than 1:1, preferably greater than 2:1, more preferably greater than 4:1.

In a particular embodiment, the mass ratio of flavor oil to glucosylated diterpene glycoside is greater than 1:10, preferably greater than 1:5, more preferably greater than 1:3.

In a particular embodiment, the diterpene glycoside is a steviol glycoside that is selected from the group consisting of Stevioside ((4α)-13-[(2-O-β-D-glucopyranosyl-β-D-glucopyranosyl)oxy]-ent-kaur-16-en-18-oic acid β-D-glucopyranosyl ester), Rebaudioside A ((4α)-13-[(2-O-β-D-glucopyranosyl-3-O-β-D-glucopyranosyl-β-D-glucopyranosyl)oxy]-kaur-6-en-8-oic acid β-D-glucopyranosyl ester), Rebaudioside C ((4α)-13-[(O-6-deoxy-α-L-mannopyranosyl-(1→2)-O-[β-D-glucopyranosyl-(1→3)]-β-D-glucopyranosyl)oxy]kaur-16-en-18-oic acid β-D-glucopyranosyl ester), Dulcoside A ((4α)-13-[[2-O-(6-deoxy-α-L-mannopyranosyl)-β-D-glucopyranosyl]oxy]kaur-16-en-18-oic acid β-D-glucopyranosyl ester), Rebaudioside B ((4α)-13-[(O-β-D-Glucopyranosyl-(1→2)-O-[β-D-glucopyranosyl-(1→3)]-β-D-glucopyranosyl)oxy]kaur-16-en-18-oic acid), Rebaudioside D ((4α)-13-[(O-β-D-glucopyranosyl-(1→2)-O-[β-D-glucopyranosyl-(1→3)]-β-D-glucopyranosyl)oxy]kaur-16-en-18-oic acid 2-O-β-D-glucopyranosyl-β-D-glucopyranosyl ester), Rebaudioside E (13-[(O-β-D-Glucopyranosyl-(1,2)-O-[ β- D-glucopyranosyl)-oxy]-kaur-16-en-18-oic acid (4')-O-β-D-glucopyranosyl-deoxy-(1,2)-O-β-D-glucopyranosyl ester), or any other steviol glycosides found in *Stevia Rebaudiana* Bertoni plant and mixture thereof.

In a particular embodiment, the diterpene glycoside is a steviol glycoside that is selected from the group consisting of Stevioside ((4α)-13-[(2-O-β-D-glucopyranosyl-β-D-glucopyranosyl)oxy]-ent-kaur-16-en-18-oicacid β-D-glucopyranosyl ester), Rebaudioside A ((4α)-13-[(2-O-β-D-glucopyranosyl-3-O-β-D-glucopyranosyl-β-D-glucopyranosyl)oxy]-kaur-6-en-8-oic acid β-D-glucopyranosyl ester), Rebaudioside C ((4α)-13-[(O-6-deoxy-α-L-mannopyranosyl-(1→2)-O-[β-D-glucopyranosyl-(1→3)]-β-D-glucopyranosyl)oxy]kaur-16-en-18-oic acid β-D-glucopyranosyl ester), Dulcoside A ((4α)-13-[[2-O-(6-deoxy-α-L-mannopyranosyl)-β-D-glucopyranosyl]oxy]kaur-16-en-18-oic acid β-D-glucopyranosyl ester), Rebaudioside B ((4α)-13-[(O-β-D-Glucopyranosyl-(1→2)-O-[β-D-glucopyranosyl-(1→3)]-β-D-glucopyranosyl)oxy]kaur-16-en-18-oic acid), Rebaudioside D ((4α)-13-[(O-β-D-glucopyranosyl-(1→2)-O-[β-D-glucopyranosyl-(1→3)]-β-D-glucopyranosyl)oxy]kaur-16-en-18-oic acid 2-O-β-D-glucopyranosyl-β-D-glucopyranosyl ester), Rebaudioside E (13-[(O-β-D-Glucopyranosyl-(1,2)-O-[ β- D-glucopyranosyl)-oxy]-kaur-16-en-18-oic acid (4')-O-β-D-glucopyranosyl-deoxy-(1,2)-O-β-D-glucopyranosyl ester), or any mixture thereof.

In a particular embodiment, the glucosylated diterpene glycoside is a glucosylated diterpene glycoside that is selected from the group consisting of glucosylated Stevioside, glucosylated Rebaudioside A, glucosylated Rebaudioside C, glucosylated Dulcoside A, glucosylated Rebaudioside B, glucosylated Rebaudioside D, glucosylated Rebaudioside E, or any other glucosylated steviol glycoside and any mixture thereof.

In a particular embodiment, the glucosylated diterpene glycoside is a glucosylated steviol glycoside that is selected from the group consisting of glucosylated Stevioside, glucosylated Rebaudioside A, glucosylated Rebaudioside C, glucosylated Dulcoside A, glucosylated Rebaudioside B, glucosylated Rebaudioside D, glucosylated Rebaudioside E, or any mixture thereof.

In a particular embodiment, the glucosylated steviol glycoside comprises from 1 to 5 additional glucose units bound to the parent steviol glycoside, preferably from 1 to 3 additional glucose units bound to the parent steviol glycoside.

The composition according to the present invention further comprises a non-polar phase comprising a flavor oil.

Under "non-polar phase" is to be understood the total amount of hydrophobic compounds in the composition according to the invention.

In a particular embodiment, the non-polar phase may further include one or more other active ingredients selected from oil-soluble pharmaceutical ingredients, oil-soluble nutraceutical ingredients (e.g., oil-soluble vitamins), oil-soluble colorants, oil-soluble antimicrobial ingredients, oil-soluble defoamers, mouthfeel modulators, taste modulators, and any combinations thereof. Useful taste modulators include acid maskers, polyaldo matric, beer hops, cooling agents, hot tasting substances, sweet enhancers, salt enhancers, salivation-inducing substances, substances causing a warmth or tingling feeling, and any combinations thereof. Exemplary mouthfeel modulators are coconut oil, coconut milk with or without sugar, vanillin, medium chain triglycerides, and combinations thereof. At least one cooling compound is selected from the group consisting of: 2-(4-ethylphenoxy)-N-(IH-pyrazol-5-yl)-N-(2-thienylmethyl)acetamide, WS-23 (2-Isopropyl-N,2,3-trimethylbutyramide), FEMA 3804; WS-3 (N-Ethyl-p-menthane-3-carboxamide), FEMA 3455; WS-5 [Ethyl 3-(p-menthane-3-carboxamido)acetate], FEMA 4309; WS-12 (IR,2S,5R)-N-(4-Methoxyphenyl)-p-menthanecarboxamide, FEMA 4681; WS-27 (N-Ethyl-2,2-diisopropylbutanamide), FEMA 4557; N-Cyclopropyl-5-methyl-2-isopropylcyclohexanecarboxamide, FEMA 4693, WS-116 (N-(I,I-Dimethyl-2-hydroxyethyl)-2,2-diethylbutanamide), N-(I,I-Dimethyl-2-hydroxyethyl)2,2-diethylbutanamide, FEMA 4603, Menthoxyethanol, FEMA 4154, N-(4-cyanomethylphenyl)-p-menthanecarboxamide, FEMA 4496; N-(2-(Pyridin-2-yl)ethyl)-3-p-menthanecarboxamide, FEMA 4549; N-(2-Hydroxyethyl)-2-isopropyl-2,3-dimethylbutanamide, FEMA 4602 and (also N-(4-(carbamoylmethyl)phenyl)-menthylcarboxamide, FEMA 4684; (IR,2S,5R)-N-(4-Methoxyphenyl)-p-menthanecarboxamide (WS-12), FEMA 4681; (2S,5R)-N-[4-(2-Amino-2-oxoethyl)phenyl]-p-menthanecarboxamide, FEMA 4684; and N-Cyclopropyl-5-methyl-2-isopropylcyclohexanecarbonecarboxamide, FEMA 4693; 2-[(2-p-Menthoxy)ethoxy]ethanol, FEMA 4718; (2,6-Diethyl-5-isopropyl-2-methyltetrahydropyran, FEMA 4680);trans-4-tert-Butylcyclohexanol, FEMA 4724; 2-(p-tolyloxy)-N-(IH-pyrazol-5-yl)-N-((thiophen-2-yl)methyl)acetamide, FEMA 4809; Menthone glycerol ketal, FEMA 3807; Menthone glycerol ketal, FEMA 3748; (-)-Menthoxypropane-I,2-diol; 3-(I-Menthoxy)-2-methylpropane-I,2-diol, FEMA 3849; Isopulegol; (+)-cis & (-)-trans p-Menthane-3,8-diol, Ratio ~ 62:38, FEMA 4053; 2,3-dihydroxy-p-menthane; 3,3,5-trimethylcyclohexanone glycerol ketal; menthyl pyrrolidone carboxylate; (IR,3R,4S)-3-menthyl-3,6-dioxaheptanoate; (IR,2S,5R)-3-menthyl methoxyacetate; (IR,2S,5R)-3-menthyl 3,6,9-trioxadecanoate; (IR,2S,5R)-3-menthyl 3.6,9-trioxadecanoate; (IR,2S,5R)-3-menthyl (2-hydroxyethoxy) acetate; (IR,2S,5R)-menthyl I I-hydroxy-3,6,9-trioxaundecanoate; Cubebol, FEMA 4497; N-(4-cyanomethylphenyl) p-menthanecarboxamide, FEMA 4496; 2-isopropyl-5-methylcyclohexyl 4-(dimethylamino)-4-oxobutanoate, FEMA 4230; N-(4-cyanomethylphenyl) p-menthanecarboxamide, FEMA 4496; N-(2-pyridin-2-ylethyl) p-;menthanecarboxamide, FEMA 4549, Menthyl lactate, FEMA 3748; 6-isopropyl-3,9-dimethyl-I,4-dioxaspiro[4.5]decan-2-one, FEMA 4285; N-benzo[I,3] dioxol-5-yl-3-p-menthanecarboxamide; N-(1-isopropyl-1,2-dimethylpropyl)-1,3-benzodioxole-5-carboxamide; N-(R)-2-oxotetrahydrofuran-3-yl-(IR,2S,5R)-p-menthane-3-carboxamide; mixture of 2,2,5,6,6-pentamethyl-2,3,6,6a-tetrahydropentalen-3a(IH)-ol and 5-(2-hydroxy-2-methylpropyl)-3,4,4-trimethylcyclopent-2-en-I-one; (IR,2S,5R)- 2-isopropyl-5-methyl-N-(2-(pyridin-2-yl)ethyl)cyclohexanecarboxamide, FEMA 4549; (2S,5R)- 2-isopropyl-5-methyl-N-(2-(pyridin-4-yl)ethyl)cyclohexanecarboxamide; N-(4-cyanomethylphenyl) p-menthanecarboxamide, FEMA 4496; (IS,2S,5R)-N-(4-(cyanomethyl)phenyl)-2-isopropyl-5-methylcyclohexanecarboxamide; I/7-isopropyl-4/5-methyl-bicyclo[2.2.2]oct-5-ene derivatives; 4-methoxy-N-phenyl-N-[2-(pyridin-2-yl)ethyl]benzamide; 4-methoxy-N-phenyl-N-[2-(pyridin-2-yl)ethyl]benzenesulfonamide; 4-chloro-N-phenyl-N-[2-(pyridin-2-yl)ethyl]benzenesulfonamide; 4-cyano-N-phenyl-N-[2-(pyridin-2-yl)ethyl]benzenesulfonamid; 4-((benzhydrylamino)methyl)-2-methoxyphenol; 4-((bis(4-methoxyphenyl)-methylamino)-methyl)-2-methoxyphenol; 4-((1,2-diphenylethylamino)methyl)-2-methoxyphenol; 4- ((benzhydryloxy)methyl)-2-methoxyphenol, 4-((9H-fluoren-9-ylamino)methyl)-2-methoxyphenol; 4-((benzhydrylamino)methyl)-2-ethoxyphenol; I-(4-methoxyphenyl)-2-(I-methyl-1H-benzo[d]imidazol-2-yl)vinyl4-methoxybenzoate; 2-(I-isopropyl-6-methyl-IH-benzo[d]imidazol-2-yl)-I-(4-methoxyphenyl)vinyl4-methoxybenzoate; (Z)-2-(I-isopropyl-5-methyl-IH-benzo[d]imidazol-2-yl)- I-(4-methoxy-phenyl)vinyl-4-methoxybenzoate; 3-alkyl-p-methan-3-ol derivatives; derivatives of fenchyl, D-bomyl, L-bornyl, exo-norbomyl, 2-methylisobomyl, 2-ethylfenchyl, 2-methylbornyl, cis-pinan-2-yl, verbanyl and isobomyl; menthyl oxamate derivatives; menthyl 3-oxocarboxylic acid esters; N-alpha-(Menthanecarbonyl)amino acid amides; p-menthane carboxamide and WS-23 analogs; (-)-(IR,2R,4S)-dihydroumbellulol; p-menthane alkyloxy amides; cyclohexane derivatives; butone derivatives; a mixture of 3-menthoxy-I -propanol and I-menthoxy-2-propanol; I-[2-hydroxyphenyl]-4-[2-nitrophenyl-]-I,2,3,6-tetrahydropyrimidine-2-one; 4-methyl-3-(I-pyrrolidinyl)-2[5H]-furanone; and combinations thereof.

In a particular embodiment, the non-polar phase is present in the composition in an amount of from 1 to 50 wt.%, preferably from 5 to 40 wt.%, based on the total amount of the composition.

In a particular embodiment, the non-polar phase consists of flavor oil.

In a particular embodiment, the composition comprises the flavor oil in an amount of from 1 to 50 wt.%, preferably from 5 to 40 wt.%.

In another particular embodiment, the composition comprises the flavor oil in an amount of from 1 to 20 wt.%, preferably from 2 to 15 wt.%, more preferably from 5 to 8 wt.%. In said embodiment, the composition is preferably a nanoemulsion.

In another particular embodiment, the composition comprises the flavor oil in an amount of from 20 to 40 wt.%, preferably from 25 to 39 wt.%. In said embodiment, the composition is preferably a microemulsion.

By "flavor oil", it is meant here a flavouring ingredient or a mixture of flavouring ingredients, solvent or adjuvants of current use for the preparation of a flavouring formulation, i.e. a particular mixture of ingredients which is intended to be added to a composition to impart, improve or modify its organoleptic properties, in particular its flavour and/or taste. Taste modulator as also encompassed in said definition. Flavouring ingredients are well known to a skilled person in the art and their nature does not warrant a detailed description here, which in any case would not be exhaustive, the skilled flavourist being able to select them on the basis of his general knowledge and according to the intended use or application and the organoleptic effect it is desired to achieve. Many of these flavouring ingredients are listed in reference texts such as in the book by S. Arctander, Perfume and Flavor Chemicals, 1969, Montclair, N.J., USA, or its more recent versions, or in other works of similar nature such as Fenaroli's Handbook of Flavor Ingredients, 1975, CRC Press or Synthetic Food Adjuncts, 1947, by M.B. Jacobs, can Nostrand Co., Inc. Solvents and adjuvants or current use for the preparation of a flavouring formulation are also well known in the art.

In a particular embodiment, the flavor oil comprises limonene. Preferably, the flavor oil consists of limonene.

In a particular embodiment, the flavor oil comprises grapefruit oil. Preferably, the flavor oil consists of grapefruit oil.

The composition according to the present invention further comprises a polar phase.

Under "polar phase" is to be understood the total amount of hydrophilic compounds in the composition according to the invention.

In a particular embodiment, the polar phase is present in the composition in an amount of from 20 to 90 wt.%, based on the total weight of the composition.

In another particular embodiment, the polar phase is present in the composition in an amount of between 70 to 90 wt.%, based on the total weight of the composition, preferably in an amount of between 78 to 85 wt.%. In said embodiment, the composition is preferably a nanoemulsion.

In another particular embodiment, the polar phase is present in the composition in an amount of between 20 to 60 wt.%, based on the total weight of the composition, preferably in an amount of between 30 to 55 wt.%. In said embodiment, the composition is preferably a microemulsion.

In a particular embodiment, the polar phase comprises water. Preferably the amount of water in the polar phase is between 60 to 100 wt.%, based on the total weight of the polar phase.

In another particular embodiment, the amount of water in the polar phase is preferably higher than 80 wt.% based on the total weight of the polar phase, more preferably 100 wt.%. In said embodiment, the composition is preferably a nanoemulsion.

In another particular embodiment, the polar phase consists of water. In said embodiment, the composition is preferably a nanoemulsion.

In another particular embodiment, the amount of water in the polar phase is preferably between 20 and 60 wt.% based on the total weight of the polar phase, more preferably between 30 and 55 wt.%. In said embodiment, the composition is preferably a microemulsion.

In a particular embodiment, the amount of water in the composition is between 10 to 90 wt.%, based on the total weight of the composition, more preferably between 20 to 85 wt.%.

In another particular embodiment, the amount of water in the composition is preferably between 70 to 90 wt.%, based on the total weight of the composition, more preferably between 78 to 85 wt.%. In said embodiment, the composition is preferably a nanoemulsion,

In another particular embodiment, the amount of water in the composition is preferably between 15 to 35 wt.%, based on the total weight of the composition, more preferably between 20 to 30 wt.%. In said embodiment, the composition is preferably a microemulsion.

In a particular embodiment, the polar phase comprises a polar non-aqueous solvent.

Under "polar non-aqueous solvent" is to be understood a polar (hydrophilic) solvent that is not water.

In a particular embodiment, the non-aqueous solvent is a food-grade solvent, in particular a non-aqueous solvent for the use for food compositions, in particular in combination with flavor ingredients.

In a particular embodiment, the polar phase comprises a non-aqueous solvent selected from the group consisting of glycerol, propylene glycol, benzylic alcohol, ethanol, propanol, isopropanol, 1,3-propanediol, butanol, butylene glycol, hexylene glycol, dipropylene glycol, ethoxydiglycol, triacetine, or any mixtures thereof. Preferably, the polar non-aqueous solvent is glycerol or propylene glycol, more preferably the polar non-aqueous solvent is propylene glycol.

In a particular embodiment, the polar phase consists of a non-aqueous solvent selected from the group consisting of glycerol, propylene glycol, benzylic alcohol, ethanol, propanol, isopropanol, 1,3-propanediol, butanol, butylene glycol, hexylene glycol, dipropylene glycol, ethoxydiglycol, triacetine, or any mixtures thereof. Preferably, the polar non-aqueous solvent is glycerol or propylene glycol, more preferably the polar non-aqueous solvent is propylene glycol.

In a particular embodiment, the polar phase consists of water and a non-aqueous solvent selected from the group consisting of glycerol, propylene glycol, benzylic alcohol, ethanol, propanol, isopropanol, 1,3-propanediol, butanol, butylene glycol, hexylene glycol, dipropylene glycol, ethoxydiglycol, triacetine, or any mixtures thereof. Preferably, the polar phase consists of water and propylene glycol.

In a particular embodiment, the polar non-aqueous solvent is present in the polar phase in an amount of from 20 to 60 wt.%, preferably from 25 to 56 wt.%, based on the total amount of the polar phase. In said embodiment, the composition is preferably a microemulsion.

In a particular embodiment, the polar non-aqueous solvent is present in the composition in an amount of from 5 to 40 wt.%, preferably from 10 to 25 wt.%, based on the total weight of the composition. In said embodiment, the composition is preferably a microemulsion.

In a particular embodiment, the composition comprises a stabilizer. Preferably, the stabilizer is ester gum (glyceryl triabietate). Preferably, the stabilizer is present in the composition in an amount of from 2 to 10 wt.%, based on the total weight of the composition, more preferably in an amount of from 2 to 4 wt.%.

In a particular embodiment, the composition according to the invention further comprises one or more antioxidants. Generally, antioxidants are chemical compounds that inhibit oxidation. Antioxidants can be classified into two groups, depending on whether they are soluble in polar solvents (hydrophilic antioxidants) or in non-polar solvents (lipophilic antioxidants). Examples for hydrophilic antioxidants are ascorbic acid (Vitamin C), green tea extract, water soluble rosemary extract, glutathione, lipoic acid, and uric acid. Examples for hydrophobic antioxidants are carotenes, tocopherols (Vitamin E), butylated hydroxyanisole (BHA), butylated hydroytoluene (BHT), oil soluble rosemary extract and ubiquinol (coenzyme Q). In case the composition is an emulsion, the antioxidant will either be present in the polar or non-polar phase depending on its hydrophilic/lipophilic properties.

In a particular embodiment, the composition further comprises one or more vitamins. A vitamin is an organic molecule (or related set of molecules) that is an essential micronutrient that an organism needs in small quantities for the proper functioning of its metabolism. Similar to what has been said above for antioxidants, vitamins can be classified into two groups, depending on whether they are soluble in polar solvents (hydrophilic vitamins) or in non-polar solvents (lipophilic vitamins). Examples for hydrophilic vitamins are Vitamin C (ascorbic acid) and the B-Vitamins (e.g. B1, B2, B3, B5, B6, B7, and B12). Examples for hydrophobic vitamins are Vitamin A, Vitamin D, Vitamin E, and Vitamin K. In case the composition is an emulsion, the vitamin will either be present in the polar or non-polar phase depending on its hydrophilic/lipophilic properties. In some cases, chemicals compounds are both antioxidants and vitamins, such as Vitamin C (ascorbic acid), Vitamin E (tocopherols). Preferably, the composition comprises Vitamin E and/or Vitamin C as antioxidants.

In a particular embodiment, the composition further comprises one or more sugars. Sugar is the generic name for sweet-tasting carbohydrates that are soluble in polar solvents, such as water. In particular, the term "sugar" refers to monosaccharides, such as glucose, fructose, and galactose, as well as disaccharides, such as sucrose, lactose, and maltose. Longer chains of sugar molecules are not regarded as sugars, and are called oligosaccharides or polysaccharides. Due to their hydrophilic character, sugar compounds are present in the polar phase in case of an emulsion.

In a particular embodiment of the invention, the composition further comprises one or more defoamers. A defoamer or an anti-foaming agent is a chemical additive that reduces and hinders the formation of foam, in particular in liquids used for industrial processes. A defoamer can be a water-dispersible defoamer or oil-soluble defoamer. Examples include silicone emulsion antifoamers, polydimethylsiloxane antifoamers, 2-octanol, petrolatum, hop lipids, alginates, mineral oil, sorbitan monostearate, and a combination thereof.

In a particular embodiment, the composition is clear in appearance, i.e. a clear composition. Compositions having a NTU value of less than 10 are considered to have a clear appearance.

The present invention further relates to a method for preparing a composition as described above, comprising the step of:
- mixing a non-polar phase comprising a flavor oil and a polar phase in the presence of a surfactant system comprising lecithin and a diterpene glycoside and/or a glucosylated diterpene glycoside.

In a particular embodiment, the diterpene glycoside and/or glucosylated diterpene glycoside is present in the polar phase before mixing of the non-polar phase with the non-polar phase is conducted. Preferably, the polar phase comprises water and/or a non-aqueous solvent as described above. Preferably, the polar phase is blended with the diterpene glycoside and/or glucosylated diterpene glycoside at a temperature of from 20 to 25 °C (room temperature) before being mixed with the non-polar phase.

In a particular embodiment, lecithin is present in the non-polar phase before mixing of the non-polar phase with the non-polar phase is conducted. Preferably, the non-polar phase consists of a flavor oil. Preferably, the non-polar phase is blended with lecithin at a temperature of from 20 to 25 °C (room temperature) before being mixed with the polar phase.

In a particular embodiment, mixing of the non-polar phase and the polar phase is performed by using a high-speed homogenizer at between 5000 and 15000 rpm, preferably between 8000 and 12000 rpm, more preferably at 10000 rpm. Preferably, high-speed homogenization is performed for 1 to 10 minutes (min), preferably for 5 minutes (min). Preferably, an IKA, T25 Digital Ultra Turrax^{®}, Germany, is used as high-speed homogenizer.

In a particular embodiment, high-speed homogenization as described above, is followed by a high-pressure homogenization step. Preferably, high-pressure homogenization is performed at 50/450 bar using a 2-stage high-pressure homogenizer. Preferably, high-pressure homogenization takes place 3 times in a row. Preferably, the high-pressure homogenizer used is a SPXFLOW, APV-1000 lab homogenizer, US. Preferably, a nanoemulsion is obtained after high-pressure homogenization.

In a particular embodiment, mixing of the non-polar phase and the polar phase is performed on stir plates at a temperature of from 20 to 25 °C (room temperature).

The present invention further relates to a method for preparing a flavored beverage or personal care product comprising the step of:
- adding the composition according to the invention to a beverage or a personal care product.

The present invention further relates to the use of a composition according to the invention for the preparation of a flavored beverage or personal care product.

The composition according to the present invention may be used for the preparation of a flavored beverage.

The term "flavored beverage" includes flavored and cream sodas, powdered soft drinks, as well as liquid concentrates such as fountain syrups and cordials; coffee and coffee-based drinks, coffee substitutes and cereal-based beverages; teas, including dry mix products as well as ready-to-drink teas (herbal and tealeaf based); fruit and vegetable juices and juice flavored beverages as well as juice drinks, nectars, concentrates, punches and "ades"; sweetened and flavored waters, both carbonated and still; sport/energy/health drinks; alcoholic beverages plus alcohol-free and other low-alcohol products including beer and malt beverages, cider, and wines (still, sparkling, fortified wines and wine coolers); other beverages processed with heating (infusions, pasteurization, ultra-high temperature, ohmic heating or commercial aseptic sterilization) and hot-filled packaging; and cold-filled products made through filtration or other preservation techniques.

In case the composition is used for the preparation of a flavored beverage, the compounds being comprised by the composition have to be selected such that they are suitable for human consumption. For example, the polar non-aqueous solvents mentioned above have to be selected such that they are suitable for human consumption. Therefore, butylene glycol and hexylene glycol should not be present in a composition according to the invention that is used for the preparation of a flavored beverage.

The composition according to the present invention may also be used for the preparation of a personal care product.

Personal care products are typically applied to the human body for the purposes of cleaning, beautifying, promoting attractiveness or changing its appearance. Personal care products are for example, toothpaste or mouthwashes.

In a particular embodiment, the inventive composition is used for the preparation of an oral care product, preferably a mouthwash. Mouthwashes or mouth rinses are liquid oral care preparations developed to clean and refresh the oral cavity or oral surface by inhibiting or killing the microorganisms that cause malodor, dental caries, tooth decay, gum diseases, gingivitis, and periodontal disorders.

The present invention also relates to a beverage or personal care product comprising a composition according to the invention.

In a particular embodiment, the beverage or personal care product comprises the composition according to the invention in amounts of from 0.001 to 5 wt.%, preferably from 0.01 to 0.1 wt.%, based on the total weight of the beverage or personal care product.

In a particular embodiment, the beverage is an alcoholic or non-alcoholic beverage, preferably the beverage is a non-alcoholic beverage.

In a particular embodiment, the personal care product is an oral care product, preferably a mouthwash. The mouthwash can be an alcoholic or alcohol-free mouthwash.

In a particular embodiment, the beverage or personal care product shows a turbidity (NTU) of less than 10. Preferably, the turbidity (NTU) is between 4 and 9.9. The turbidity (NTU) is preferably between 4.5 and 6 when the composition according to the invention is a microemulsion.

The NTU-value refers to "Nephelometric Turbidity Units" that are representative for the turbidity of a composition, and are measured by means of a turbidimeter as specified by the United States Environmental Protection Agency. Preferably, turbidity is measured by a portable turbidity meter (Hanna instruments, Woonsocket, Rl, HI93703). Generally, beverages or personal care products having a NTU value above 15 can be considered hazy and not clear. By contrast, beverages and personal care products having a NTU of less than 10 can be considered to have a clear appearance.

In a particular embodiment, the beverage or personal care product shows a droplet size of the dispersed phase of between 30 and 150 nm, preferably between 45 and 130 nm. Droplet sizes are preferably measured by a Zetasizer nano ZS (Malvern Panalytical Limited, Worcs, UK). Droplet size of the dispersed phase is preferably between 95 and 125 nm when the composition according to the invention is a microemulsion. Droplet size of the dispersed phase is preferably between 48 and 96 nm when the composition according to the invention is a nanoemulsion.

In a particular embodiment, the beverage shows a pH-value of from 2.5 to 7, preferably from 2.5 to 4.0.

As the inventive composition shows sufficient stability under acidic conditions, it can also be present in a beverage showing acid pH-values.

In a particular embodiment, flavor oil is present in the beverage in an amount of between 1 and 1000 ppm (parts per million), preferably from 10 to 500 ppm, more preferably from 20 to 100 ppm, based on the total weight of the beverage or personal care product.

In a particular embodiment, flavor oil is present in the personal care product in an amount of between 0.001 to 0.5 wt.%, preferably from 0.01 to 0.25 wt.%, based on the total weight of the personal care product.

In a particular embodiment, diterpene glycoside is present in the beverage or personal care product in an amount of between 10 and 100 ppm (parts per million), based on the total weight of the beverage or personal care product.

In a particular embodiment, steviol glycoside is present in the beverage or personal care product in an amount of between 10 and 100 ppm (parts per million), based on the total weight of the beverage or personal care product.

In a particular embodiment, glucosylated diterpene glycoside is present in the beverage or personal care product in an amount of between 10 and 150 ppm (parts per million), preferably between 20 and 125 ppm, based on the total weight of the beverage or personal care product.

In a particular embodiment, glucosylated steviol glycoside is present in the beverage or personal care product in an amount of between 10 and 150 ppm (parts per million), preferably between 20 and 125 ppm, based on the total weight of the beverage or personal care product.

In a particular embodiment, lecithin is present in the beverage in an amount of between 5 and 100 ppm (parts per million), based on the total weight of the beverage or personal care product.

In a particular embodiment, ester gum is present in the beverage or personal care product in an amount of between 20 and 40 ppm (parts per million), based on the total weight of the beverage or personal care product.

In a particular embodiment, propylene glycol is present in the beverage or personal care product in an amount of between 5 and 50 ppm (parts per million), based on the total weight of the beverage or personal care product.

In a particular embodiment, water is present in the beverage or personal care product in an amount of between 80 and 98 wt.%, based on the total weight of the beverage or personal care product, preferably between 90 and 95 wt.%.

In a particular embodiment, sugar is present in the beverage or personal care product in an amount of between 2 and 10 wt.%, based on the total weight of the beverage or personal care product, preferably between 3 and 8 wt.%.

In a particular embodiment, citric acid is present in the beverage or personal care product in an amount of between 0.05 and 5 wt.%, based on the total weight of the beverage or personal care product, preferably between 0.1 and 0.5 wt.%.

In a particular embodiment, Vitamin C is present in the beverage or personal care product in an amount of between 0.005 and 1 wt.%, based on the total weight of the beverage or personal care product, preferably between 0.01 and 0.05 wt.%.

In a particular embodiment, trisodium citrate dihydrate and/or sodium citrate is present in the beverage or personal care product in an amount of between 0.005 and 0.5 wt.%, based on the total weight of the beverage or personal care product, preferably between 0.01 and 0.02 wt.%.

In view of the above, the present invention provides a composition comprising a polar and non-polar phase as well as a surfactant system that allows for sufficiently high contents of flavor oil in the composition.

Furthermore, a composition is provided that merely comprises accepted natural surfactants, but that nevertheless shows good functionality.

In particular, the inventive composition can be conveniently used for the preparation of a beverage or personal care product that is clear in appearance and that shows sufficient stability during storage.

Therefore, a particular objective technical problem underlying the present invention is the provision of a composition comprising a polar and non-polar phase, and a surfactant system that only comprises naturally occurring surfactants.

A further particular objective technical problem underlying the present invention is the provision of a composition comprising a polar and non-polar phase, and a surfactant system, that shows sufficient stability during storage.

A yet further particular objective technical problem underlying the present invention is the provision of a composition comprising a polar and non-polar phase, and a surfactant system that allows for sufficiently high amounts of flavor oil.

A yet further particular objective technical problem underlying the present invention is the provision of a composition that can be used for the preparation of a clear beverage or personal care product.

### Examples

### Example 1:

### 1. Preparation of flavor nanoemulsions

Flavor microemulsions according to Samples 1 to 3 were prepared as follows:
The polar phase was prepared by mixing steviol glycosides (Steviol glycosides REBA 80) with water. The non-polar phase was prepared by blending flavour oil (grapefruit oil) with lecithin (Lipoid lecithin H100) at a temperature of between 20-25 °C. Upon merging the non-polar phase with the polar phase, the mixture was pre-emulsified by using a high-speed homogenizer (IKA, T25 Digital Ultra Turrax^{®}, Germany) at 10.000 rpm for 5 min. Afterwards, the obtained pre-emulsions were homogenized at 50/450 bar using a 2-stage high-pressure homogenizer (SPXFLOW, APV-1000 lab homogenizer, US). High-pressure treatment was repeated 3 times.

**Table 1. Flavor nanoemulsion compositions.**

| **Sample** | **1** | **2** | **3** |
|---|---|---|---|
| **Ingredient** | **%wt** | **%wt** | **%wt** |
| Limonene | 7 | 7 | 7 |
| Ester gum | 3 | 3 | 3 |
| Lipoid Lecithin H100 | 3 | 5 | 6 |
| Stevioside SG95 REBA80 | 3 | 5 | 4 |
| Water | up to 100 | up to 100 | up to 100 |

Further details as to used ingredients are given in Table 2 below:

| **Ingredient** | |
|---|---|
| Lipoid Lecithin H100 | Sunflower lecithin containing not less than 90 wt.% of phosphatidylcholine (ex. Lipoid GmbH) |
| Stevioside SG95 REBA80 | Stevioside extract (purity, 95 wt.%) containing 80 wt.% of Rebaudioside A (ex. Layn). |

### 2. Preparation of beverages using the flavor microemulsions according to Samples 1 to 3

Beverages I to III were prepared by adding the flavor nanoemulsions of Samples 1 to 3 (FNE 1 to 3), respectively, to the beverage bases according to Table 3 below. The beverages showed a pH-value of 2.8.

**Table 3. Final beverage compositions.**

| Ingredients | I | II | III |
|---|---|---|---|
| | Mass (g) | Mass (g) | Mass (g) |
| FNE 1 | 1 | - | - |
| FNE 2 | - | 1 | - |
| FNE 3 | - | - | 1 |
| Sugar | 60 | 60 | 60 |
| Citric acid anhydrous | 3.0 | 3.0 | 3.0 |
| Ascorbic Acid | 0.1 | 0.1 | 0.1 |
| Trisodium citrate dihydrate | 1.4 | 1.4 | 1.4 |
| Water up to | 1000 | 1000 | 1000 |
| | | | |
| Z-average* (nm) | 48.27 | 95.08 | 78.26 |
| NTU | 9.53 | 8.41 | 6.99 |

| | | | |
|---|---|---|---|
| *Z-average refers to the intensity weighted mean hydrodynamic diameter | | | |

Droplet sizes of the beverages were measured by a Zetasizer nano ZS (Malvern Instruments Limited, Worcs, UK). The turbidity of the beverages was measured by a portable turbidity meter (Hanna instruments, HI93703, US) and was reported in Nephelometric Turbidity Unit (NTU).

Due to the low turbidity and droplet sizes, Beverages I to III were clear (translucent) in appearance. Based on appearance and turbidity, Beverages I to III showed good stability.

### Example 2:

### 1. Preparation of flavor microemulsions

Flavor microemulsions according to Samples 1 to 6 were prepared by mixing all the ingredients shown in Table 4 together on stir plates at a temperature between 20 and 25 °C.

**Table 4. Flavor microemulsion compositions.**

| **Sample** | **1** | **2** | **3** | **4** | **5** | **6** |
|---|---|---|---|---|---|---|
| **Ingredient** | **%wt** | **%wt** | **%wt** | **%wt** | **%wt** | **%wt** |
| Grapefruit oil | 35.00 | 32.50 | 30.00 | 27.50 | 25.00 | 38.54 |
| Glucosylated steviol glycosides | 28.00 | 26.00 | 24.00 | 22.00 | - | 25.17 |
| Steviol glycosides REBA 80 | - | - | - | - | 20.00 | - |
| Lipoid lecithin H100 | 7.00 | 6.50 | 6.00 | 5.50 | 5.00 | 6.29 |
| Propylene glycol | 10.00 | 11.67 | 13.33 | 15.00 | 25.00 | 10.00 |
| Water | 20.00 | 23.33 | 26.67 | 30.00 | 25.00 | 20.00 |
| **Total** | **100.00** | **100.00** | **100.00** | **100.00** | **100.00** | **100.00** |
| | | | | | | |
| Appearance | Clear | Clear | Clear | Clear | Clear | Clear |

Further details as to used ingredients are given in Table 5 below:

| **Ingredient** | |
|---|---|
| Glucosylated steviol glycosides | Glucosylated steviol glycosides (ex. Pure Circle) |
| Steviol glycosides REBA 80 | Stevioside extract from *Stevia rebaudiana* Bertoni (purity, 95 wt.%) containing 80% of Rebaudioside A (ex. Layn). |
| Lipoid lecithin H100 | Sunflower lecithin containing not less than 90 wt.% of phosphatidylcholine (ex. Lipoid GmbH) |

### 2. Preparation of beverages using the flavor microemulsions according to Samples 1 to 6

Beverages I to VI were prepared by adding the flavor microemulsions of Samples 1 to 6 (FME 1-6), respectively, to the beverage bases according to Table 6 below. The beverages showed a pH-value of 2.8.

**Table 6. Final beverage compositions.**

| Ingredients | I | II | III | IV | V | VI |
|---|---|---|---|---|---|---|
| | Mass (g) | Mass (g) | Mass (g) | Mass (g) | Mass (g) | Mass (g) |
| FME 1 | 0.57 | - | - | - | - | - |
| FME 2 | - | 0.62 | - | - | - | - |
| FME 3 | - | - | 0.67 | - | - | - |
| FME 4 | - | - | - | 0.73 | - | - |
| FME 5 | - | - | - | - | 0.80 | - |
| FME 6 | - | - | - | - | - | 0.52 |
| Sugar | 60 | 60 | 60 | 60 | 60 | 60 |
| Citric Acid | 3 | 3 | 3 | 3 | 3 | 3 |
| Vitamin C | 0.2 | 0.2 | 0.2 | 0.2 | 0.2 | 0.2 |
| Sodium Citrate | 0.5 | 0.5 | 0.5 | 0.5 | 0.5 | 0.5 |
| Water up to | 1000 | 1000 | 1000 | 1000 | 1000 | 1000 |
| | | | | | | |
| Z-average* (nm) | 115.4 | 95.45 | 96.25 | 98.73 | 120.0 | 107.7 |
| NTU | 5.26 | 4.87 | 5.06 | 5 | 5.72 | 4.92 |

| | | | | | | |
|---|---|---|---|---|---|---|
| *Z-average refers to the intensity weighted mean hydrodynamic diameter | | | | | | |

Droplet sizes of the beverages were measured by a Zetasizer nano ZS (Malvern Instruments Limited, Worcs, UK). The turbidity of the beverages was measured by a portable turbidity meter (Hanna instruments, HI93703, US) and was reported in Nephelometric Turbidity Unit (NTU).

Due to the low turbidity and droplet sizes, Beverages I to VI were clear (translucent) in appearance and stable.

## Claims

1. A composition comprising
- a surfactant system comprising
- lecithin, and
- a diterpene glycoside and/or a glucosylated diterpene glycoside,
- a non-polar phase comprising a flavor oil,
- a polar phase.

2. The composition according to claim 1, wherein the composition is an emulsion, preferably a nanoemulsion or a microemulsion.

3. The composition according to claim 1 or 2, wherein the composition comprises lecithin in an amount of from 1 to 10 wt.%, preferably from 2.5 to 7.5 wt.%.

4. The composition according to any one of claims 1 to 3, wherein the composition comprises the diterpene glycoside and/or glucosylated diterpene glycoside in an amount of from 1 to 40 wt.%, preferably from 2.5 to 30 wt.%.

5. The composition according to any of claims 1 to 4, wherein the mass ratio of diterpene glycoside and/or glucosylated diterpene glycoside to lecithin is from 20:1 to 1:20, preferably from 10:1 to 1:10.

6. The composition according to any of claims 1 to 5, wherein the diterpene glycoside is a steviol glycoside, preferably selected from the group consisting of Stevioside ((4α)-13-[(2-O-β-D-glucopyranosyl-β-D-glucopyranosyl)oxy]-ent-kaur-16-en-18-oic acid β-D-glucopyranosyl ester), Rebaudioside A ((4α)-13-[(2-O-β-D-glucopyranosyl-3-O-β-D-glucopyranosyl-β-D-glucopyranosyl)oxy]-kaur-6-en-8-oic acid β-D-glucopyranosyl ester), Rebaudioside C ((4α)-13-[(O-6-deoxy-α-L-mannopyranosyl-(1→2)-O-[β-D-glucopyranosyl-(1→3)]-β-D-glucopyranosyl)oxy]kaur-16-en-18-oic acid β-D-glucopyranosyl ester), Dulcoside A ((4α)-13-[[2-O-(6-deoxy-α-L-mannopyranosyl)-β-D-glucopyranosyl]oxy]kaur-16-en-18-oic acid β-D-glucopyranosyl ester), Rebaudioside B ((4α)-13-[(O-β-D-Glucopyranosyl-(1→2)-O-[β-D-glucopyranosyl-(1→3)]-β-D-glucopyranosyl)oxy]kaur-16-en-18-oic acid), Rebaudioside D ((4α)-13-[(O-β-D-glucopyranosyl-(1→-2)-O-[β-D-glucopyranosyl-(1→3)]-β-D-glucopyranosyl)oxy]kaur-16-en-18-oic acid 2-O-β-D-glucopyranosyl-β-D-glucopyranosyl ester), Rebaudioside E (13-[(O-β- D-Glucopyranosyl-(1,2)-O-[ β-D-glucopyranosyl)-oxy]-kaur-16-en-18-oic acid (4')-O-β-D-glucopyranosyl-deoxy-(1,2)-O-β-D-glucopyranosyl ester), or any other steviol glycosides found in *Stevia Rebaudiana* Bertoni plant and mixture thereof.

7. The composition according to any of claims 1 to 6, wherein the glucosylated diterpene glycoside is a glucosylated steviol glycoside, preferably selected from the group consisting of glucosylated Stevioside, glucosylated Rebaudioside A, glucosylated Rebaudioside C, glucosylated Dulcoside A, glucosylated Rebaudioside B, glucosylated Rebaudioside D, glucosylated Rebaudioside E, or any mixture thereof.

8. The composition according to any one of claims 1 to 7, wherein the composition comprises the flavor oil in an amount of from 1 to 50 wt.%, preferably from 5 to 40 wt.%.

9. The composition according to any one of claims 1 to 8, wherein the polar phase comprises water, preferably the composition comprises water in an amount of from 10 to 90 wt.% based on the total weight of the composition.

10. The composition according to any one of claims 1 to 9, wherein the polar phase comprises a non-aqueous solvent selected from the group consisting of glycerol, propylene glycol, benzylic alcohol, ethanol, propanol, isopropanol, 1,3-propanediol, butanol, butylene glycol, hexylene glycol, dipropylene glycol, ethoxydiglycol, triacetine, or any mixtures thereof, preferably the polar non-aqueous solvent is glycerol or propylene glycol.

11. The composition according to claim 10, wherein the composition comprises the polar non-aqueous solvent in an amount of from 5 to 40 wt.%, preferably from 10 to 25 wt.%.

12. A method for preparing a composition according to any of claims 1 to 11, comprising the step of:
- mixing a non-polar phase comprising a flavor oil and a polar phase in the presence of a surfactant system comprising lecithin and a diterpene glycoside and/or a glucosylated diterpene glycoside.

13. A method for preparing a flavored beverage or personal care product comprising the step of:
- adding the composition according to any of claims 1 to 11 to a beverage or a personal care product.

14. A beverage or personal care product comprising a composition according to any one of claims 1 to 11.

15. Use of a composition according to any one of claims 1 to 11 for the preparation of a flavored beverage or personal care product.

## Patentansprüche

1. Zusammensetzung, umfassend:
- ein Tensidsystem, umfassend:
- Lecithin und
- ein Diterpenglycosid und/oder ein glucosyliertes Diterpenglycosid,
- eine unpolare Phase, die ein Aromaöl umfasst,
- eine polare Phase.

2. Zusammensetzung nach Anspruch 1, wobei die Zusammensetzung eine Emulsion, vorzugsweise eine Nanoemulsion oder eine Mikroemulsion ist.

3. Zusammensetzung nach Anspruch 1 oder 2, wobei die Zusammensetzung Lecithin in einer Menge von 1 bis 10 Gew.%, vorzugsweise 2,5 bis 7,5 Gew.% umfasst.

4. Zusammensetzung nach einem der Ansprüche 1 bis 3, wobei die Zusammensetzung das Diterpenglycosid und/oder glucosylierte Diterpenglycosid in einer Menge von 1 bis 40 Gew.%, vorzugsweise 2,5 bis 30 Gew.% umfasst.

5. Zusammensetzung nach einem der Ansprüche 1 bis 4, wobei das Massenverhältnis von Diterpenglycosid und/oder glucosyliertem Diterpenglycosid zu Lecithin 20:1 bis 1:20, vorzugsweise 10:1 bis 1:10 beträgt.

6. Zusammensetzung nach einem der Ansprüche 1 bis 5, wobei das Diterpenglycosid ein Steviolglycosid ist, das vorzugsweise ausgewählt ist aus der Gruppe bestehend aus Steviosid ((4α)-13-[(2-O-β-D-Glucopyranosyl-β-D-glucopyranosyl)oxy]-ent-kaur-16-en-18-säure-β-D-glucopyranosylester), Rebaudiosid A ((4α)-13-[(2-O-β-D-Glucopyranosyl-3-O-β-D-glucopyranosyl-β-D-glucopyranosyl)oxy]-kaur-6-en-8-säure-β-D-glucopyranosylester), Rebaudiosid C ((4α)-13-[(0-6-Deoxy-α-L-mannopyranosyl-(1->2)-O-[β-D-glucopyranosyl-(1->3)]-β-D-glucopyranosyl)oxy]kaur-16-en-18-säure-β-D-glucopyranosylester), Dulcosid A ((4α)-13-[[2-O-(6-Deoxy-α-L-mannopyranosyl)-β-D-glucopyranosyl]oxy]kaur-16-en-18-säure-β-D-glucopyranosylester), Rebaudiosid B ((4α)-13-[(O-β-D-Glucopyranosyl-(1->2)-O-[β-D-glucopyranosyl-(1->3)]-β-D-glucopyranosyl)oxy]kaur-16-en-18-säure), Rebaudiosid D ((4α)-13-[(O-β-D-Glucopyranosyl-(1->2)-O-[β-D-glucopyranosyl-(1->3)]-β-D-glucopyranosyl)oxy]kaur-16-en-18-säure-2-O-β-D-glucopyranosyl-β-D-glucopyranosylester), Rebaudiosid E (13-[(O-β-D-Glucopyranosyl-(1,2)-O-[β-D-glucopyranosyl)-oxy]-kaur-16-en-18-säure-(4')-O-β-D-glucopyranosyl-deoxy-(1,2)-O-β-D-glucopyranosylester) oder jeglichen anderen Steviolglycosiden, die man in der Pflanze *Stevia Rebaudiana* Bertoni findet, und Mischung davon.

7. Zusammensetzung nach einem der Ansprüche 1 bis 6, wobei das glucosylierte Diterpenglycosid ein glucosyliertes Steviolglycosid ist, das vorzugsweise ausgewählt ist aus der Gruppe bestehend aus glucosyliertem Steviosid, glucosyliertem Rebaudiosid A, glucosyliertem Rebaudiosid C, glucosyliertem Dulcosid A, glucosyliertem Rebaudiosid B, glucosyliertem Rebaudiosid D, glucosyliertem Rebaudiosid E oder jeglicher Mischung davon.

8. Zusammensetzung nach einem der Ansprüche 1 bis 7, wobei die Zusammensetzung das Aromaöl in einer Menge von 1 bis 50 Gew.%, vorzugsweise 5 bis 40 Gew.% umfasst.

9. Zusammensetzung nach einem der Ansprüche 1 bis 8, wobei die polare Phase Wasser umfasst, wobei die Zusammensetzung vorzugsweise Wasser in einer Menge von 10 bis 90 Gew.% umfasst, bezogen auf das Gesamtgewicht der Zusammensetzung.

10. Zusammensetzung nach einem der Ansprüche 1 bis 9, wobei die polare Phase ein nicht-wässriges Lösungsmittel ausgewählt aus der Gruppe bestehend aus Glycerin, Propylenglykol, Benzylalkohol, Ethanol, Propanol, Isopropanol, 1,3-Propandiol, Butanol, Butylenglykol, Hexylenglykol, Dipropylenglykol, Ethoxydiglykol, Triacetin oder jeglichen Mischungen davon umfasst, wobei das polare nicht-wässrige Lösungsmittel vorzugsweise Glycerin oder Propylenglykol ist.

11. Zusammensetzung nach Anspruch 10, wobei die Zusammensetzung das polare nicht-wässrige Lösungsmittel in einer Menge von 5 bis 40 Gew.%, vorzugsweise 10 bis 25 Gew.% umfasst.

12. Verfahren zur Herstellung einer Zusammensetzung nach einem der Ansprüche 1 bis 11, umfassend den Schritt:
- Mischen einer unpolaren Phase, die ein Aromaöl umfasst, und einer polaren Phase in Gegenwart eines Tensidsystems, das Lecithin und ein Diterpenglycosid und/oder ein glucosyliertes Diterpenglycosid umfasst.

13. Verfahren zur Herstellung eines aromatisierten Getränks oder Körperpflegeprodukts, umfassend den Schritt:
- Zugeben der Zusammensetzung gemäß einem der Ansprüche 1 bis 11 zu einem Getränk oder einem Körperpflegeprodukt.

14. Getränk oder Körperpflegeprodukt, das eine Zusammensetzung gemäß einem der Ansprüche 1 bis 11 umfasst.

15. Verwendung einer Zusammensetzung gemäß einem der Ansprüche 1 bis 11 zur Herstellung eines aromatisierten Getränks oder Körperpflegeprodukts.

## Revendications

1. Composition comprenant
- un système de tensioactif comprenant
∘ une lécithine, et
∘ un glycoside de diterpène et/ou un glycoside de diterpène glucosylé,
- une phase non polaire comprenant une huile d'arôme,
- une phase polaire.

2. Composition selon la revendication 1, la composition étant une émulsion, préférablement une nanoémulsion ou une microémulsion.

3. Composition selon la revendication 1 ou 2, la composition comprenant une lécithine en une quantité allant de 1 à 10 % en poids, préférablement de 2,5 à 7,5 % en poids.

4. Composition selon l'une quelconque des revendications 1 à 3, la composition comprenant le glycoside de diterpène et/ou le glycoside de diterpène glucosylé en une quantité allant de 1 à 40 % en poids, préférablement de 2,5 à 30 % en poids.

5. Composition selon l'une quelconque des revendications 1 à 4, le rapport en masse du glycoside de diterpène et/ou glycoside de diterpène glucosylé sur la lécithine étant de 20 : 1 à 1 : 20, préférablement de 10 : 1 à 1 : 10.

6. Composition selon l'une quelconque des revendications 1 à 5, le glycoside de diterpène étant un glycoside stéviol, préférablement choisi dans le groupe constitué par Stévioside (ester de β-D-glucopyranosyle d'acide (4α)-13-[(2-O-β-D-glucopyranosyl-β-D-glucopyranosyl)oxy]-ent-kaur-16-én-18-oïque), rébaudioside A (ester de β-D-glucopyranosyle d'acide (4a)-13-[(2-O-β-D-glucopyranosyl-3-O-β-D-glucopyranosyl-β-D-glucopyranosyl)oxy]-kaur-6-én-8-oïque), rébaudioside C (ester de β-D-glucopyranosyle d'acide (4α)-13-[(O-6-désoxy-α-L-mannopyranosyl-(1→2)-O-[β-D-glucopyranosyl-(1→3)]-β-D-glucopyranosyl)oxy]kaur-16-én-18-oïque), dulcoside A (ester de β-D-glucopyranosyle d'acide (4α)-13-[[2-O-(6-désoxy-α-L-mannopyranosyl)-β-D-glucopyranosyl]oxy]kaur-16-én-18-oïque), rébaudioside B (acide (4α)-13-[(O-β-D-glucopyranosyl-(1→2)-O-[B-D-glucopyranosyl-(1→3)]-β-D-glucopyranosyl)oxy]kaur-16-én-18-oïque), rébaudioside D (ester de 2-O-β-D-glucopyranosyl-β-D-glucopyranosyle d'acide (4α)-13-[(O-β-D-glucopyranosyl-(1→2)-O-[β-D-glucopyranosyl-(1→3)]-β-D-glucopyranosyl)oxy]kaur-16-én-18-oïque), rébaudioside E (ester de (4')-O-β-D-glucopyranosyl-désoxy-(1,2)-O-β-D-glucopyranosyle d'acide 13-[(O-β-D-Glucopyranosyl-(1,2)-O-[β-D-glucopyranosyl)-oxy]-kaur-16-én-18-oïque), ou de quelconques autres glycosides stéviol présents dans le végétal de *Stevia Rebaudiana* Bertoni et un mélange correspondant.

7. Composition selon l'une quelconque des revendications 1 à 6, le glycoside de diterpène glucosylé étant un glycoside stéviol glucosylé, préférablement choisi dans le groupe constitué par le stévioside glucosylé, le rébaudioside A glucosylé, le rébaudioside C glucosylé, le dulcoside A glucosylé, le rébaudioside B glucosylé, le rébaudioside D glucosylé, le rébaudioside E glucosylé ou un quelconque mélange correspondant.

8. Composition selon l'une quelconque des revendications 1 à 7, la composition comprenant l'huile d'arôme en une quantité allant de 1 à 50 % en poids, préférablement de 5 à 40 % en poids.

9. Composition selon l'une quelconque des revendications 1 à 8, la phase polaire comprenant de l'eau, préférablement la composition comprenant de l'eau en une quantité allant de 10 à 90 % en poids sur la base du poids total de la composition.

10. Composition selon l'une quelconque des revendications 1 à 9, la phase polaire comprenant un solvant non aqueux choisi dans le groupe constitué par le glycérol, le propylèneglycol, l'alcool benzylique, l'éthanol, le propanol, l'isopropanol, le 1,3-propanediol, le butanol, le butylèneglycol, l'hexylèneglycol, le dipropylèneglycol, l'éthoxydiglycol, la triacétine, ou de quelconques mélanges correspondants, préférablement le solvant non aqueux polaire étant le glycérol ou le propylèneglycol.

11. Composition selon la revendication 10, la composition comprenant le solvant non aqueux polaire en une quantité allant de 5 à 40 % en poids, préférablement de 10 à 25 % en poids.

12. Procédé pour la préparation d'une composition selon l'une quelconque des revendications 1 à 11, comprenant les étapes de :
- mélange d'une phase non polaire comprenant une huile d'arôme et d'une phase polaire en la présence d'un système de tensioactif comprenant une lécithine et un glycoside de diterpène et/ou un glycoside de diterpène glucosylé.

13. Procédé pour la préparation d'une boisson ou d'un produit de soin personnel aromatisé(e) comprenant les étapes de :
- ajout de la composition selon l'une quelconque des revendications 1 à 11 à une boisson ou un produit de soin personnel.

14. Boisson ou produit de soin personnel comprenant une composition selon l'une quelconque des revendications 1 à 11.

15. Utilisation d'une composition selon l'une quelconque des revendications 1 à 11 pour la préparation d'une boisson ou d'un produit de soin personnel aromatisé(e).
